# EUROPEAN PATENT SPECIFICATION

(11) **EP 3 138 239 B1**
(45) Date of publication and mention of the grant of the patent: **24.04.2019**
(21) Application number: 14720967.0
(22) Date of filing: 30.04.2014
(51) Int. Cl.: H04L 12/26, H04L 12/24, H04W 24/04, H04W 88/08, H04B 17/14, H04B 17/318

(54) **METHOD AND UNIT FOR HANDLING DETERIORATING HARDWARE**
VERFAHREN UND EINHEIT ZUR HANDHABUNG VON VERFALLENDER HARDWARE
PROCÉDÉ ET UNITÉ POUR LA MANIPULATION D'UN MATÉRIEL SE DÉTÉRIORANT

(43) Date of publication of application: 08.03.2017
(73) Proprietor: Telefonaktiebolaget LM Ericsson (publ), 164 83 Stockholm (SE)
(72) Inventor: MÖLLER, Karl-Magnus, S-414 54 Göteborg (SE); MATTSSON, Hans, S-517 37 Bollebygd (SE); BJÖRKMAN, Gerry, S-433 41 Partille (SE); WATERS, William, S-423 38 Torslanda (SE); SIGVARDSON, Erik, S-417 63 Göteborg (SE)
(74) Representative: Ericsson
(86) International application number: PCT/EP2014/058848
(87) International publication number: WO 2015/165527

(56) References cited:
- EP-A2- 2 293 454
- US-A1- 2014 023 359
- US-B1- 6 490 063

## Description

### TECHNICAL FIELD

Embodiments herein relate generally to a first node and a method in the first node. More particularly the embodiments herein relate to handling errors in a communications system.

### BACKGROUND

Microwave radio link equipment typically consists of different unit such as e.g. an Indoor Unit (IDU) and an Outdoor Unit (ODU), two IDUs, two ODU's etc. The ODU may be typically mounted high up on a mast and the IDU may be located in a site building structure. The IDU and the ODU is connected with a wired communication link which may be wired or wireless.

Performing correct cabling of micro wave radio link equipment can in some cases be very difficult and may require specific tools that may be very expensive, leading to using tools that do not provide the best results. If a wired communication link is not correctly installed, the signal quality will deteriorate by time due to moisture, physical force applied to the wired communication link etc.

When a wired communication link starts to deteriorate it is difficult to identify that this is the cause of the problem. Since the wired communication link may be one of the most difficult part of a radio link installation to exchange, this is often done as a last resort after replacing IDUs and ODUs on near-end and far-end sites.

In user interviews, network operations staff has said that it is difficult to distinguish a software fault from a faulty wired communication link.

This means that when a cable fault has occurred, network traffic will be down and the operator will spend a lot of man hours trying to identify the fault. Therefore, there is a need to minimize traffic impact and to quickly take action to replace the cable if that is deemed faulty.

Currently it is difficult for a service technician or network operations staff of microwave radio link equipment to see if a problem is caused by problem with wired communication links.

Prior art document EP2293454 shows a radio device includes a radio unit to perform modulation processing on a signal, an antenna to transmit and receive signals to and from an external unit, a cable to connect the radio unit to the antenna, a reflection time calculation unit to calculate a reflection time taken from after the transmission signal is input into a prescribed part of the radio unit until a transmission signal which is output from the radio unit is reflected on a path from the cable to the antenna is fed back to the prescribed part of the radio device, and a fault position specifying unit to specify a position candidate at which a fault occurs on the cable based on the calculated reflection time when the calculated reflection time is less than a reflection time threshold value.

A fault determination unit 119 specifies a fault position candidate based on the reflection power that is input from the monitor control unit 117, the reflection time that is input from the delay time control unit 117a, and the reflection power threshold value and the reflection time threshold value that are stored in the threshold value storage unit 118. The fault determination unit 119 stores a combination of the reflection power and the reflection time as a log in a prescribed storage unit. If the reflection power is greater than the reflection power threshold value, the radio device 100 according to the second embodiment specifies the antenna 128 as the fault position candidate. The radio device 100 may specify the fault position candidate without using a test signal such as a pilot signal. That is, the radio device 100 may specify the fault position candidate during operation. A reflection time calculation methodology is however insufficient for detecting faults whose location could comprise more units than the cable.

Prior art document US 6,490,063 B1 shows an analog optical transmission system is capable of detecting faults of optical fibers as follows when executing the bilateral communication of analog optical signals by use of two-route optical fibers, uplink and downlink, between the Master and Slave units: While the Master unit has the Master light emission means for transmitting a prescribed monitoring optical signal to the Slave unit via the downlink optical fiber, the Slave unit has the Slave light reception means for receiving the abovementioned monitoring optical signal sent from the Master unit via the downlink optical fiber. The Slave light emission means returns the above-mentioned monitoring optical signals received by the Slave light reception means to the Master unit via the uplink optical fiber. Then, in the Master unit, its light reception means receives the above-mentioned monitoring optical signal returned from the Slave unit via the uplink optical fiber, allowing a monitoring signal-level detection means to detect the level of the above-mentioned monitoring optical signal received by the Master light reception means.

Prior art document US 2014/0023359 A1 shows a local oscillation light source outputs locally-oscillated light. A light receiving unit phase-separates an input optical signal by making the optical signal interfere with the locally oscillated light and outputs an analog electric signal corresponding to the phase-separated optical signal. An analog-to-digital converting unit converts the analog electric signal into a digital signal. A processing unit performs digital signal processing by using the digital signal. A failure detection unit determines whether or not the optical signal is being input to the light receiving unit, or detects a failure in the light receiving unit, the analog-to-digital converting unit or the processing unit based on light intensity of the optical signal, whether or not the analog electric signal can be generated in the light receiving unit, and an amplitude of the analog electric signal output from the light receiving unit.

### SUMMARY

The invention is related to a method according to claim 1 and a first unit according to claim 8. Further embodiments of the invention are defined by the dependent claims.

Embodiments herein afford many advantages, of which a non-exhaustive list of examples follows:
An advantage of the embodiments herein is that they may provide an indication of whether the deteriorating hardware is in the second unit, the third unit or in the wired communication link for the customer operating microwave network equipment.

Currently wired communication link faults are very costly due to the problem in clear detection of the faults and also that it is easier to replace second units and third units than to replace a wired communication link. Therefore, improving the fault indication for the wired communication link, second unit and third unit with the embodiments herein may lead to lowering the number of No Fault Found returns to equipment of second and third units.

By providing data and trend analysis, the embodiments herein may provide an advantage of enabling a microwave network operator to proactively schedule service technicians to replace the second unit, the third unit or the wired communication link within a maintenance window (when traffic and traffic impact is low) rather than reactively sending out a service technician to troubleshoot and replace equipment under stress. This may provide and advantage of improved network quality for the operator.

The embodiments herein are not limited to the features and advantages mentioned above. A person skilled in the art will recognize additional features and advantages upon reading the following detailed description.

### BRIEF DESCRIPTION OF THE DRAWINGS

The embodiments herein will now be further described in more detail in the following detailed description by reference to the appended drawings illustrating the embodiments and in which:
- Fig. 1: is a schematic block diagram illustrating embodiments of a communications system.
- Fig. 2: is a signaling diagram illustrating embodiments of a method.
- Fig. 3: is a schematic block diagram illustrating embodiments of a communications system.
- Fig. 4: is a schematic block diagram illustrating embodiments of a communications system.
- Fig. 5: is a schematic block diagram illustrating embodiments of a communications system.
- Fig. 6: is a schematic block diagram illustrating embodiments of a communications system.
- Fig. 7a, 7b and 7c: are graphs illustrating a case where the wired communication link is working fine.
- Fig. 8a, 8b and 8c: are graphs illustrating a case where the wired communication link comprises deteriorating hardware.
- Fig. 9a, 9b and 9c: are graphs illustrating a case where the second unit tx comprises deteriorating hardware.
- Fig. 10a, 10b and 10c: are graphs illustrating a case where the third unit tx comprises deteriorating hardware.
- Fig. 11a, 11b and 11c: are graphs illustrating a case where the second unit rx comprises deteriorating hardware.
- Fig. 12a, 12b and 12c: are graphs illustrating a case where the third unit rx comprises deteriorating hardware.
- Fig. 13: is a flow chart illustrating embodiments of a method performed by a first unit.
- Fig. 14: is a schematic block diagram illustrating embodiments of a first unit.

The drawings are not necessarily to scale and the dimensions of certain features may have been exaggerated for the sake of clarity. Emphasis is instead placed upon illustrating the principle of the embodiments herein.

### DETAILED DESCRIPTION

One problem with today's technology is that a snapshot value of the state is not good enough to evaluate the state of the wired communication link and it could also be that one unit's transmitter or another unit's receiver and vice versa is experiencing a hardware problem. This means that there is no reliable fault indication of wired communication link problems. Why this is the case may to some extent be explained by the fact that units such as e.g. ODUs and IDUs often are developed by different organizations with clear responsibilities, but wired communication link faults are a joint responsibility for developers of the units.

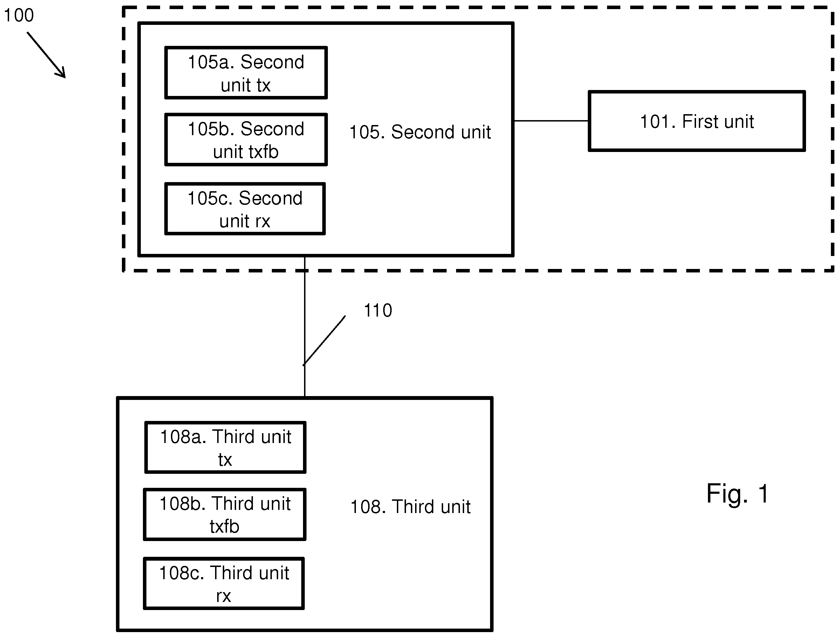

**Figure 1** depicts a **communications system 100** in which embodiments herein may be implemented. The communications system 100 comprises a **first unit 101,** a **second unit 105** and a **third unit 108.**

In some embodiments, the first unit 101 and the second unit 105 are separate standalone nodes. In other embodiments, the first unit 101 and the second unit 105 are co-located, i.e. they are one common unit as indicated with a dotted box in figure 1. In some embodiments, the first unit 101 is referred to as a first node, the second unit 105 is referred to as a second node and the third unit 108 is referred to as a third node.

In one embodiment, the second unit 105 is comprised within an IDU and the third unit 108 is comprised within an ODU. In another embodiment, the first unit 101 and the second unit 105 are both comprised within an IDU and the third unit 108 is comprised within an ODU. In yet another embodiment, the second unit 105 is comprised within an ODU and the third unit 108 is comprised within an IDU. In another embodiment, the first unit 101 and the second unit 105 are both comprised within an ODU and the third unit 108 is comprised within an IDU. In some embodiments, each of the second unit 105 and the second unit 108 are radio units.

In some embodiments, the first unit 101 is comprised in e.g. a network management system, an analysis database etc.

Table 1 below illustrates some example of the second unit 105 and the third unit 108, where the left column represents the second unit 105 and the right column represents the third unit 108.

**Table 1 Second and third units**

| **Second unit 105** | **Third unit 108** |
|---|---|
| IDU | ODU |
| ODU | IDU |
| IDU | IDU |
| ODU | ODU |

An IDU may be described as a node or a unit which is located indoors, it may be described as a radio link unit, a microwave radio link equipment etc. Similarly, the ODU may be described as a node or unit which is located outdoors, it may also be described as a radio link unit, a microwave radio link equipment etc.

In some embodiments, the second unit 105 may comprise a **second unit tx 105a,** a **second unit txfb 105b** and a **second unit rx 105c** and the third unit 108 may comprise a **third unit tx 108a,** a **third unit txfb 108b** and a **third unit rx 108c** which will be described in more detail below. tx refers to a transmitter or to transmitting, txfb refers to a transmitter feedback or transmitting feedback and rx refers to a receiver or to receiving. These tx, rx and txfb entities may be referred to as signal level gauges. The following table 2 illustrates an overview of the entities that may be comprised in each of the two units, where the left column represents the second unit 105 and the right column represents the third unit 108:

**Table 2: Entities in the second unit 105 and third unit 108**

| **Second unit 105** | **Third unit 108** |
|---|---|
| Second unit tx 105a | Third unit tx 108a |
| Second unit txfb 105b | Third unit txfb 108b |
| Second unit rx 105c | Third unit rx 108c |

A **wired communication link 110** may be located between the second unit 105 and the third unit 108. The communication link 110 may be any type of physical link or cable such as e.g. a coaxial cable or an optical fiber cable. The wired communication link 110 may be adapted to carry data, signal, voice, video images etc. at a certain frequency between the second unit 105 and the third unit 108. In case the first unit 101 and the second unit 105 are co-located, the wired communication link 110 may be seen as being located between this co-located unit ant the third unit 108. In some embodiments, the wired communication link 110 is adapted to carry signals in two directions, i.e. from the second unit 105 to the third unit 108 and from the third unit 108 to the second unit 105. In other embodiments, the wired communication link 110 comprises sub links where each sub link is dedicated to a particular transmission direction. For example, a first sub link may be for transmission from the second unit 105 to the third unit 108, and a second sub link may be for transmission from the third unit 108 to the second unit 105. The sub links may also be wired communication links.

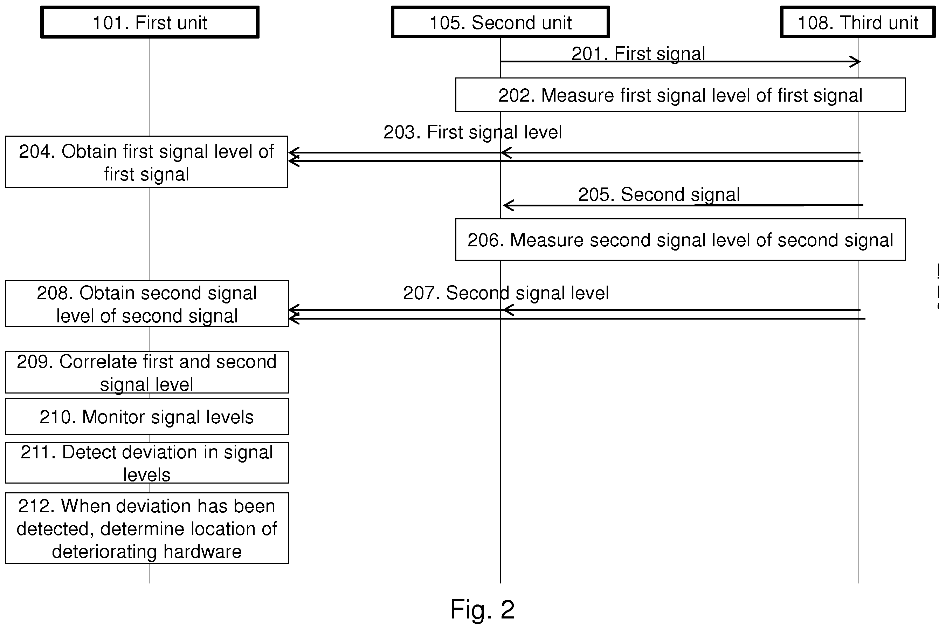

The method determining location of deteriorating hardware in the communications system 100 according to some embodiments will now be described with reference to the signaling diagram depicted in **Figure 2****.** The method comprises the following steps, which steps may as well be carried out in another suitable order than described below:

### Step 201

The second unit 105 may transmit a first signal to the third unit 108 over the wired communication link 110. In some embodiments, the first signal may be transmitted by the second unit tx 105a and received by the third unit rx 108c.

### Step 202

The second unit 105 and third unit 108 may measure the first signal level of the first signal.

The first signal level may comprise a first tx signal level, e.g. measured by the second unit tx 105a, for the first signal when transmitted from the second unit 105 and a first rx signal level, e.g. measured by the third unit rx 108c, for the second signal when received by the third unit 108 (e.g. the third unit rx comprised in the third unit). The first signal level may further comprise a first txfb signal level, e.g. measured by the second unit txfb 105b.

The following table 3 shows an overview of the possible components of the first signal level and which entity in the second unit 105 and third unit 108 that measures the respective signal level:

**Table 3**

| **First signal level** | **Measuring unit** |
|---|---|
| First tx signal level | Second unit tx 105a |
| First txfb signal level | Second unit txfb 105b |
| First rx signal level | Third unit rx 108c |

### Step 203

The first signal level is transmitted to the first unit 101 over the wired communication link 110. The first signal level may be transmitted from at least one of the second unit 105 and the third unit 108. There are several alternatives for transmitting the first signal level to the first unit 101, as indicated with the three arrows for step 203 in figure 2.

In some embodiments, first signal level comprises the first tx signal level, the second txfb signal level and the first rx signal level. The first rx signal level may be transmitted directly from the third unit 108 to the first unit 101. In other embodiments, the first rx signal level is transmitted from the third unit 108 to the second unit 105 for further transmission to the first unit 101.

### Step 204

The first unit 101 obtains the first signal level of the first signal. In one embodiment, this may be done by receiving the measured first signal level from at least one of the second unit 105 and the third unit 108 in step 203. In another embodiment, this may be done by that the second unit 105 transmitting information indicating the first signal to the first unit 101, and then the first unit 101 obtains the first signal level by performing an internal measurement of the first signal level. In some embodiments, the first signal level may be obtained continuously or discontinuously.

### Step 205

The third unit 108 may transmit a second signal to the second unit 105 via the wired communication link 110. In some embodiments, the second signal may be transmitted by the third unit tx 108a and received by the second unit rx 105c.

### Step 206

When the second unit 105 has received the second signal, the second unit 105 may measure a second level of the second signal.

The second signal level may comprise a second tx signal level, e.g. measured by the third unit tx 108a, for the first signal when transmitted from the third unit 108 and a second rx signal level, e.g. measured by the second unit rx 105c, for the second signal when received by the second unit 105. The second signal level may further comprise a second txfb signal level, e.g. measured by the third unit txfb 108b.

The following table 4 shows an overview of the possible components of the second signal level and which entity in the second unit 105 and third unit 108 that measures the respective signal level:

**Table 4**

| **Second signal level** | **Measuring unit** |
|---|---|
| Second tx signal level | Third unit tx 108a |
| Second txfb signal level | Third unit txfb 108b |
| Second rx signal level | Second unit rx 105c |

### Step 207

The measured second signal level may be transmitted to the first unit 101, e.g. using the wired communication link 110. The second signal level may be transmitted by at least one of the second unit 105 and the third unit 208 to the first unit 101. There are several alternatives for transmitting the second signal level to the first unit 101, as indicated with the three arrows for step 207 in figure 2.

In some embodiments, the second tx signal level and the second txfb signal level are transmitted directly from the third unit 108 to the first unit 101. In other embodiments, the second tx signal level and the second txfb signal level are transmitted from the third unit 108 to the second unit 105 for further transmission to the first unit 101.

### Step 208

The first unit 101 obtains the second signal level of the second signal. In one embodiment, this may be done by receiving the measured second signal level from at least one of the second unit 105 and the third unit 108 in step 207. In another embodiment, this may be done by that the second unit 105 transmitting information indicating the second signal to the first unit 101, and then the first unit 101 obtains the second signal level by performing an internal measurement of the second signal level.

### Step 209

The first unit 101 may correlate the first and second signal levels.

### Step 210

The first unit 101 monitors the first and second signals levels over a period of time.

### Step 211

The first unit 101 detects a deviation in the monitored signal levels.

### Step 212

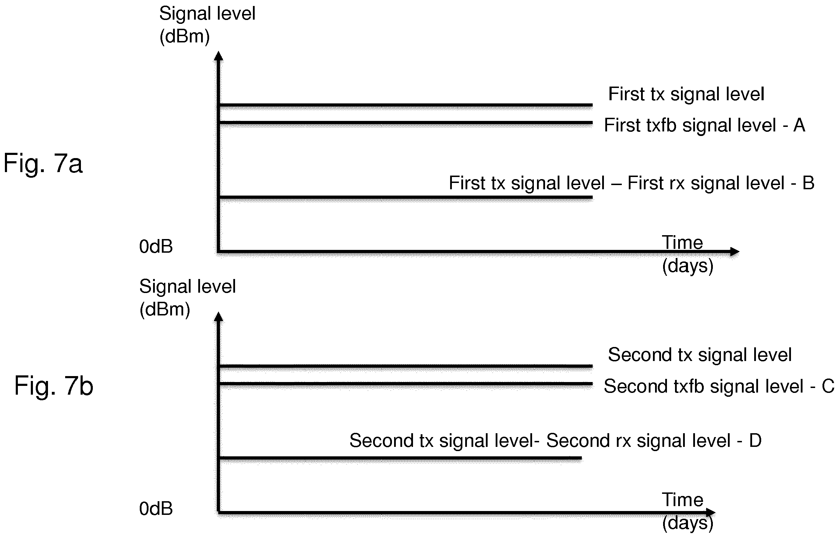

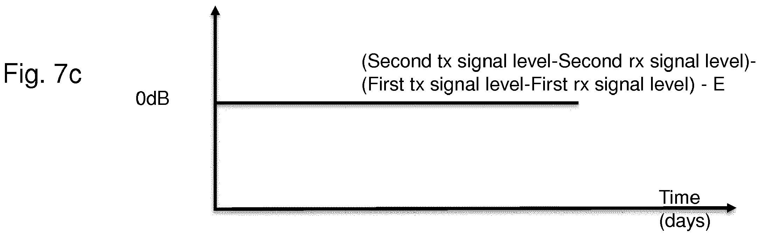

When a deviation in the monitored signal levels has been detected, the first unit 101 determines the location of the deteriorating hardware. The location of the deteriorating hardware may be determined by comparing the deviation in monitored signal levels to known signal deviations for various locations of the deteriorating hardware. The location is in at least one of the wired communication link 110, the second unit 105 and the second third unit 108. The known signal deviations may be seen in figures 7-12 and in their corresponding description below.

As mentioned earlier, the second unit txfb 105b and third unit txfb 108b are transmission feedback units. The second unit txfb 105 the third unit txfb 108b enables the possibility to narrow down if a fault is located in the second unit 105 or in the third unit 108. For example, when the first signal is transmitted from the second unit 105, the second unit tx 105a measures the first tx signal level, and then the second unit txfb 105b may measure the first txfb signal level of the first signal. The second unit txfb 105b may be seen as being located after the second unit tx 105a on the wired communication link 110. Thus, there are two signal levels associated with the first signal when transmitted from the second unit 105, i.e. the first tx signal level and the first txfb signal level. Similarly, when the third signal is transmitted from the third unit 108, the third unit tx 108a measures the second tx signal level, and then the third unit txfb 108b may measure the second txfb signal level of the second signal. The third unit txfb 108b may be seen as being located after the third unit tx 108a on the wired communication link 110. Thus, there are two signal levels associated with the second signal when transmitted from the third unit 108, i.e. the second tx signal level and the second txfb signal level.

In some embodiments, first signal and the second signal may each be a dedicated signal for the purpose of detecting deteriorating hardware. In other embodiments, the first signal and the second signal may beach be a signal having other purposes. The first signal and the second signal may each be for example a digital or analogue signal, they may each carry data traffic such as voice data or multimedia data etc.

### Sampling and processing of data

The data from each signal level gauge may be stored locally at the second unit or third, e.g. at their respective controller boards. If the local storage is limited, it may also be possible to send the collected measurement data from the gauges to a network management system which could store and process the data remotely. The first unit 101 when being a standalone unit may be comprised in such management system.

The control traffic between the second unit 105 and the third unit 108 may be the same wired communication link that it is monitoring.

By monitoring the trends of the correlated data it is possible to make a prediction for when the signal level deteriorate to go below the receiver threshold and thus start to have a traffic impact (or trigger correction coding to compensate), this may be used to give an early warning for the wired communication link 110, the second unit 105 and the third unit 108 faults so that instead of reacting to these kind of faults urgently, replacement of cables or equipment may be scheduled in a maintenance window.

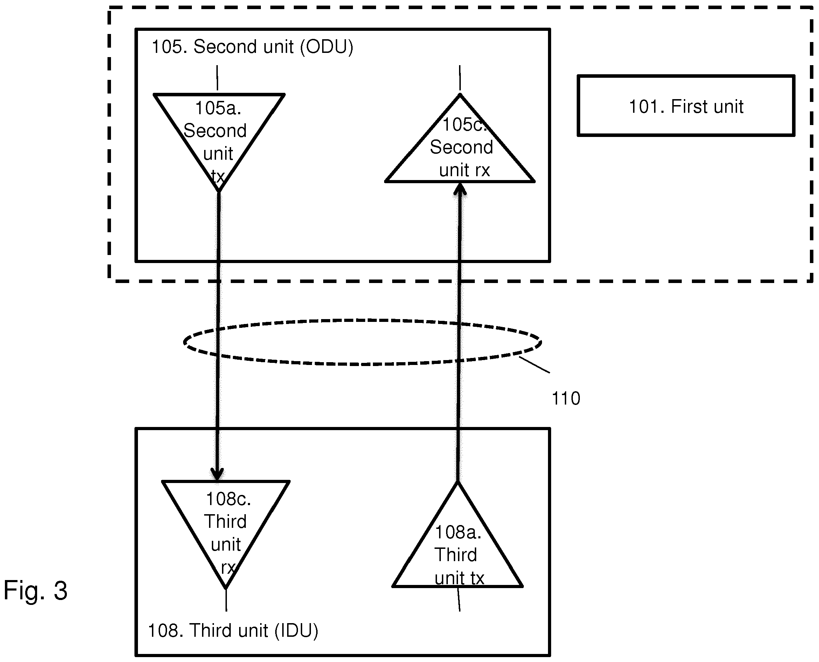

**Figure 3** is a schematic block diagram illustrating an embodiment of the communications system 100 where the second unit 105 is exemplified to be comprised within an ODU and the third unit 108 is exemplified to be comprised within an IDU. The first unit 101 is not illustrated in figure 3, but it may be either a standalone unit or it may be co-located with the second unit 105 as described in relation to figure 2 above.

In figure 3, the second unit 105 comprises the second unit tx 105a and the second unit rx 105c. The third unit 105 comprises the third unit tx 108a and the third unit rx 108c.

In some embodiments, the second unit tx 105a transmits the first signal and the third unit rx 108c receives the first signal. In some embodiments, the third unit tx 108a transmits the second signal and the second unit rx 105c receives the second signal.

The first signal may comprise a first tx signal level measured at the second unit tx 105a, the first signal may comprise a first rx signal level measured at the third unit rx 108c. The second signal may comprise a second tx signal level measured at the third unit tx 108a and a second rx signal level measured at the second unit rx 105c.

As mentioned earlier, the wired communication link 110 may be a bi-directional link or it may comprise sub links where each sub link is dedicated to a particular transmission direction. The bi-directional link is illustrated with a dotted circle in figure 3, and the sub links are illustrated with continuous arrows in figure 3. For example, for a very large installed base, the wired communication link 110 between the second unit 105 being an ODU and the third unit 108 being an IDU is a single wire coaxial cable that is used bidirectionally. However the embodiments herein are equally applicable to cables that use different wires for each direction.

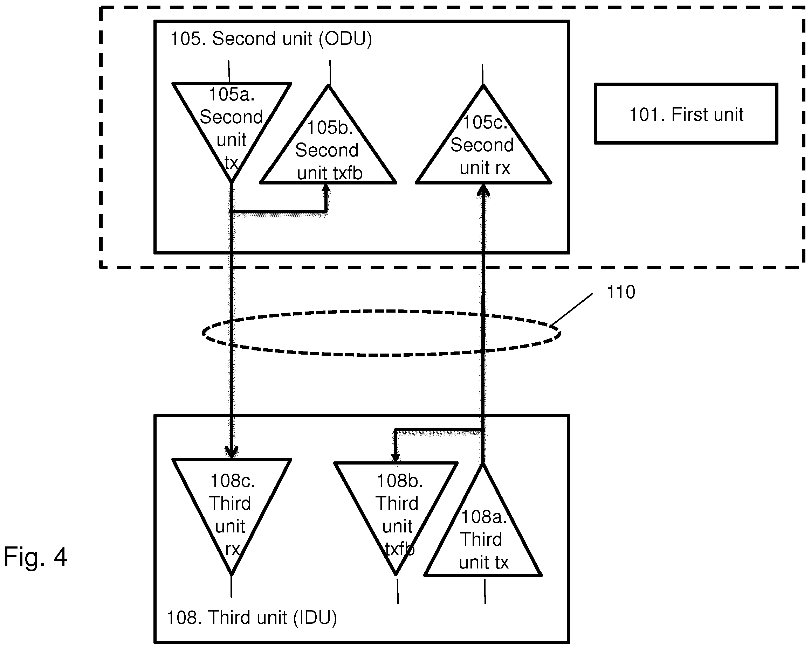

**Figure 4** is a schematic block diagram illustrating another embodiment of the communications system 100. Similar to figure 3, the second unit 105 in figure 4 is exemplified to be comprised within an ODU and the third unit 108 is exemplified to be comprised within an IDU. The first unit 101 is not illustrated in figure 4, but it may be either a standalone unit or it may be co-located with the second unit 105 as described in relation to figure 2 above.

In order to narrow down if a deteriorating hardware is located in the second unit 105 or the third unit 108 an additional feedback level gauge may be introduced i.e. the second unit txfb 105b and the third unit txfb 108b, where txfb refers to transmission feedback. Thus, in addition to the second unit tx 105a and the second unit rx 105c, the second unit may comprise a second unit txfb 105b. In addition to the third unit tx 108a and the third unit rx 108c, the third unit 108 may comprise a third unit txfb 108b.

The first signal may comprise a first tx signal level measured at the second unit tx 105a, the first signal may comprise a first rx signal level measured at the third unit rx 108c and the first signal may comprise a first txfb signal level measured at the second unit txfb 105b. The second signal may comprise a second tx signal level measured at the third unit tx 108a, a second rx signal level measured at the second unit rx 105c and a second txfb signal level measured at the third unit txfb 108b.

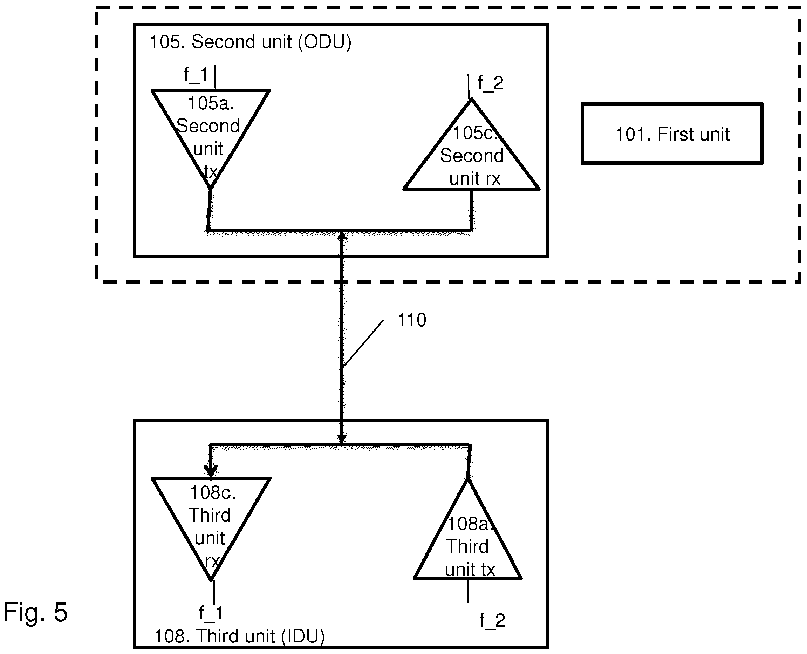

**Figure 5** is a schematic block diagram illustrating another embodiment of the communications system 100. In figure 5, the wired communication link 110 is exemplified to be one single bi-directional link, in contrast to two sub links as exemplified in figures 3 and 4. Similar to figure 3, the second unit 105 comprises a second unit tx 105a and a second unit rx 105b and the third unit 105 comprises a third unit tx 108a and a third unit rx 108c. The first signal transmitted from the second unit tx 105a to the third unit rx 105c as illustrated in step 201 in figure 2, may have a first frequency f_1. The second signal transmitted from the third unit tx 108a to the second unit rx 105c as illustrated in step 205 in figure 2, may have a second frequency f_2.

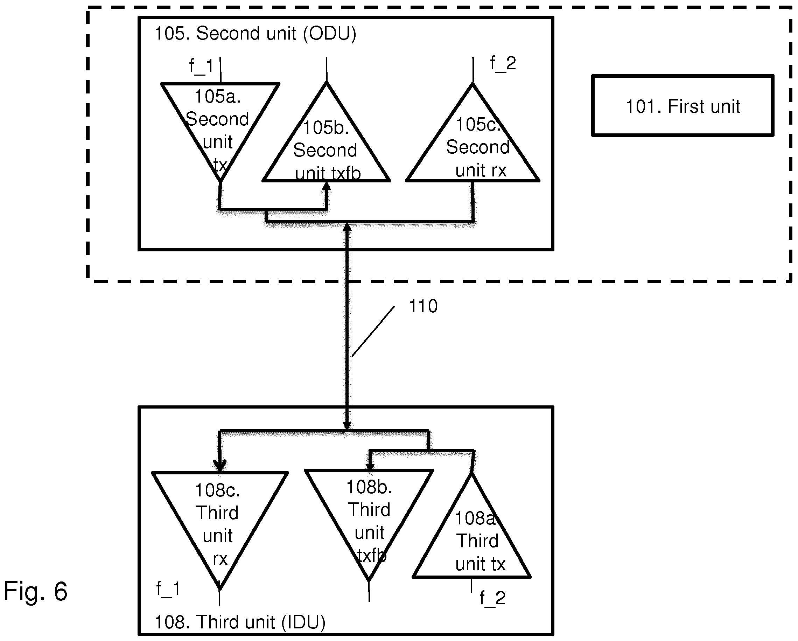

**Figure 6** is a schematic block diagram illustrating another embodiment of the communications system 100. In figure 6, the wired communication link 110 is exemplified to be one single bi-directional link, in contrast to two sub links as exemplified in figures 3 and 4. Similar to figure 4, the second unit 105 comprises a second unit tx 105a, a second unit rx 105c and a second unit txfb 105b and the third unit 105 comprises a third unit tx 108a, a third unit rx 108c and a third unit txfb 108b. The first signal transmitted from the second unit tx 105a to the third unit rx 105c as illustrated in step 201 in figure 2, may have a first frequency f_1. The second signal transmitted from the third unit tx 108a to the second unit rx 105c as illustrated in step 205 in figure 2, may have a second frequency f_2.

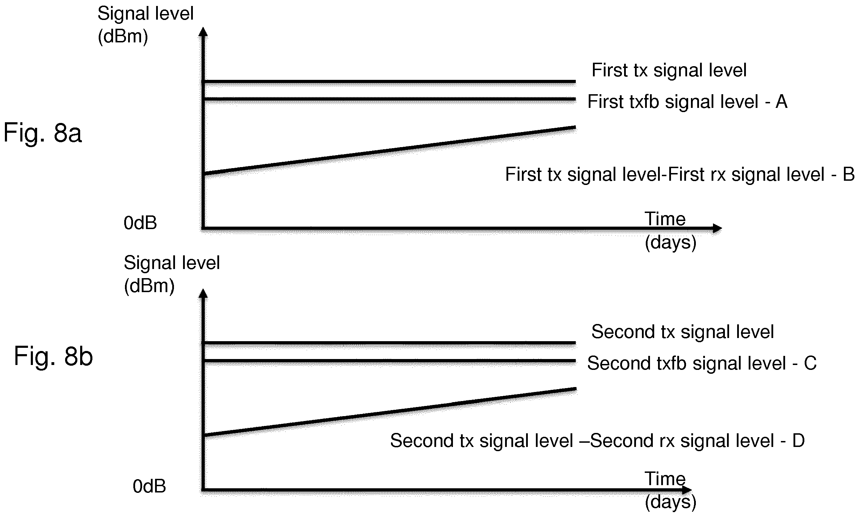

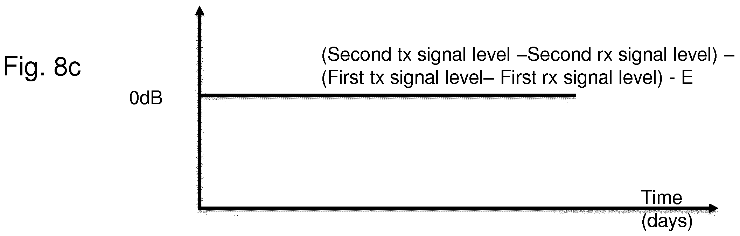

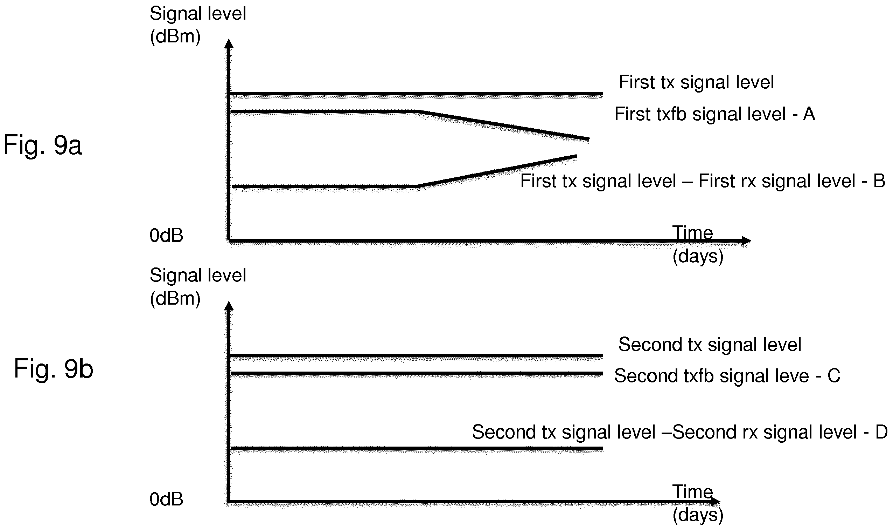

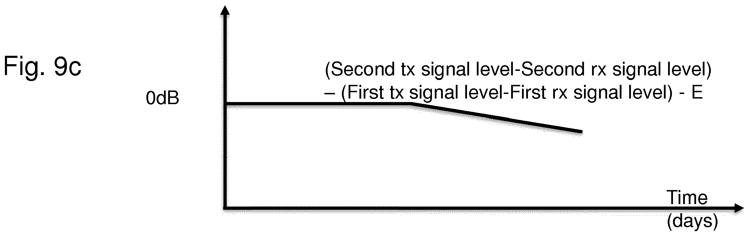

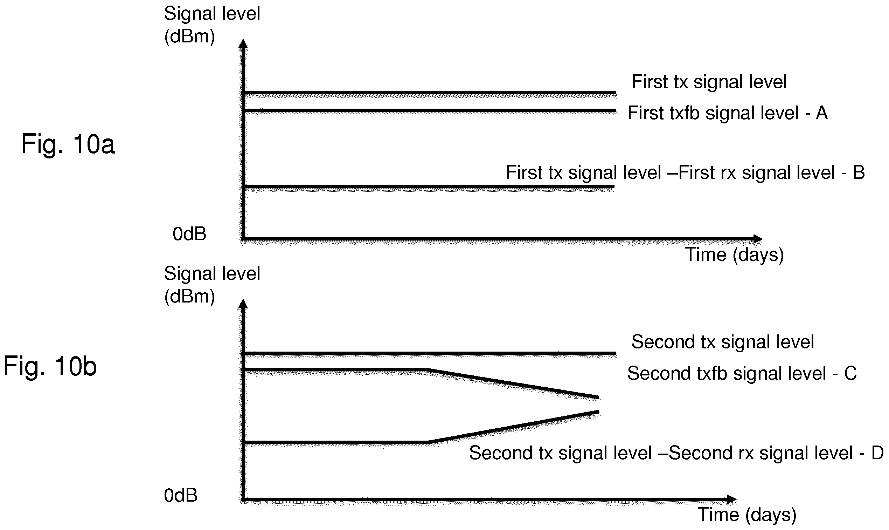

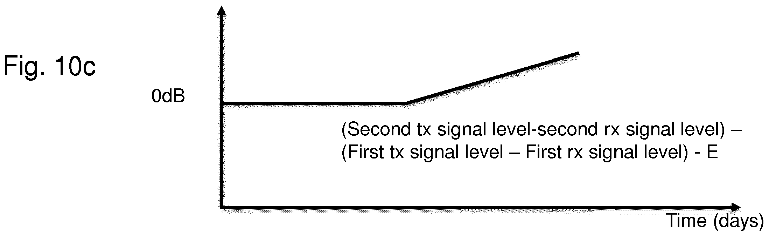

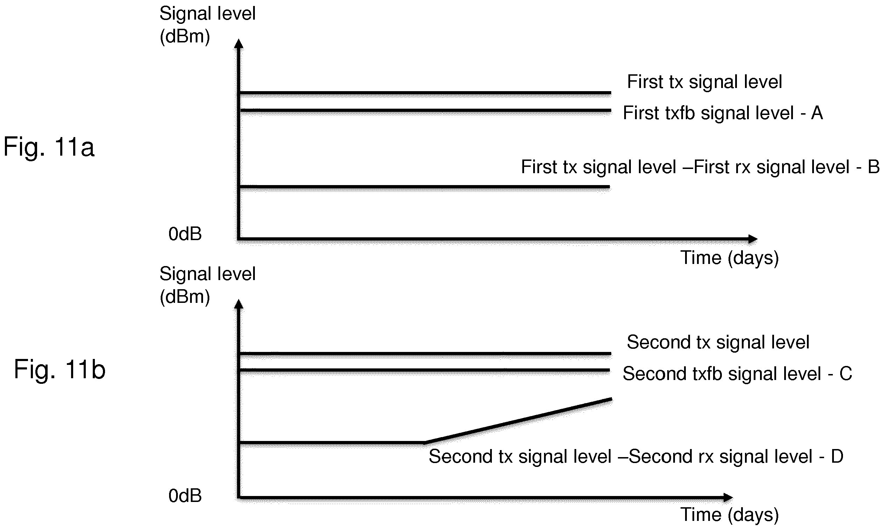

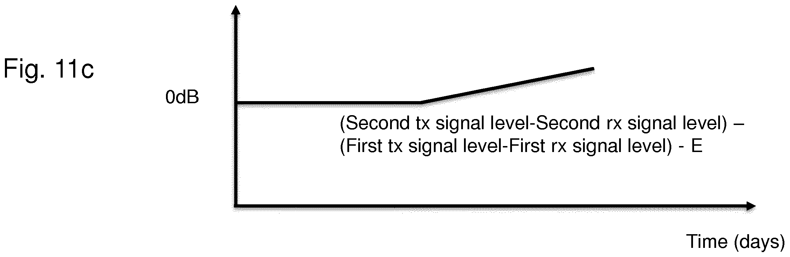

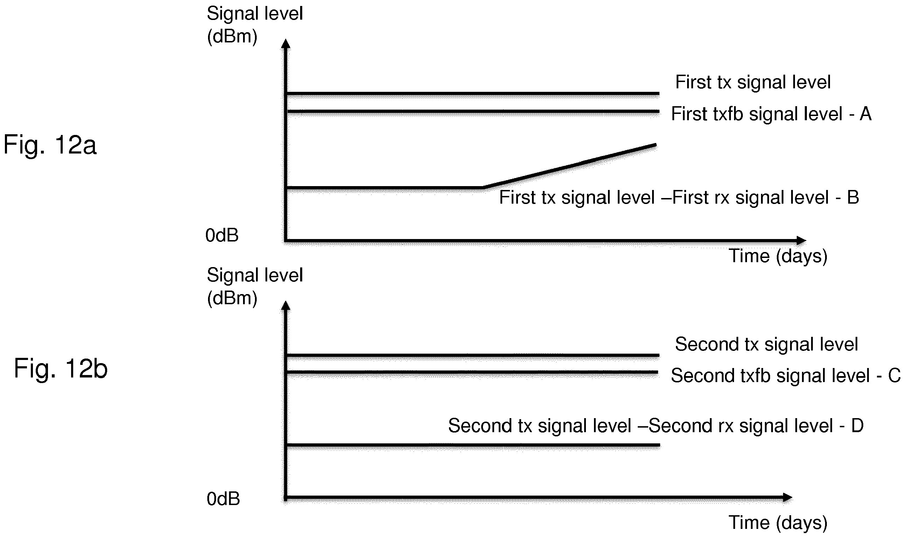

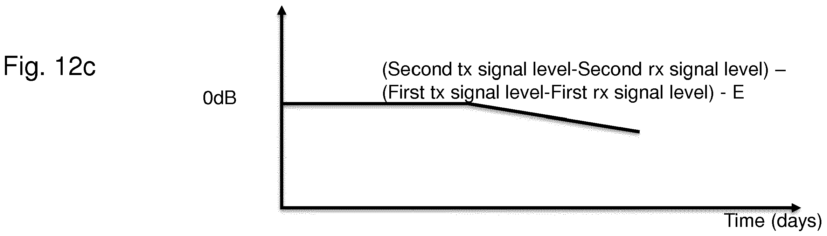

Six different uses cases for isolating the deteriorating hardware especially indicating wired communication link faults will now be described with reference to figures 7-12. The six uses cases are as follows:
1. Wired communication link 110 is working fine (figures 7a, 7b, 7c).
2. Wired communication link 110 is starting to deteriorate (figures 8a, 8b, 8c).
3. Second unit tx 105a is suffering from deteriorating hardware (figures 9a, 9b, 9c).
4. Third unit tx 108a is suffering from deteriorating hardware (figures 10a, 10b, 10c).
5. Second unit rx 105c is suffering from deteriorating hardware (figures 11a, 11b, 11c).
6. Third unit rx 108c is suffering from deteriorating hardware (figures 12a, 12b, 12c).

The example embodiment of the communications system 100 illustrated in Figure 6 is used as an example for the uses cases.

**Figures 7a, 7b** **and** **7c** illustrate a use case when the wired communication link 110 is working fine, i.e. there is no deteriorating hardware in the wired communication link 110. The x-axis of the graphs in figures 7a, 7b and 7c represents the time measured in days and the y-axis represents the signal level measured in dBm and the signal ratio in dB.

In figure 7a, a first tx signal level for the second unit tx 105a is shown as the top line and the first txfb signal level for the second unit txfb 105b is the middle line. The first tx signal level for the second unit tx 105a minus the first rx signal level for the third unit rx 108c is illustrated as the bottom line in figure 7a. As mentioned above with relation to steps 203 and 208 in figure 2, in some embodiments, the signal levels may obtained by the first unit 101 either by receiving the measured signal levels from the second unit 105 and the third unit 108, i.e. the second unit 105 and the third unit 108 has measured the signal levels. In other embodiments, the signal levels may be obtained by the first unit 101 by that the first unit 101 performs an internal measurement of the first signal level. All three lines in figure 7a are substantially horizontal which indicates that the signal levels are substantially constant.

In figure 7b, a second tx signal level for the third unit tx 108a is shown as the top line and the second txfb signal level for the third unit txfb 108b is the middle line. The second tx signal level for the third unit tx 108a minus the second rx signal level for the second unit rx 105c is illustrated as the bottom line in figure 7b. As mentioned above with relation to steps 203 and 208 in figure 2, in some embodiments, the signal levels may obtained by the first unit 101 either by receiving the measured signal levels from the second unit 105 and the third unit 108, i.e. the second unit 105 and the third unit 108 has measured the signal levels. In other embodiments, the signal levels may be obtained by the first unit 101 by that the first unit 101 performs an internal measurement of the first signal level. All three lines in figure 7b are substantially horizontal which indicates that the signal levels are substantially constant.

In figure 7c, the line represents a correlation between the bottom lines in figures 7a and 7b, i.e. between the first signal level and the second signal level. In other words, (second tx signal level-second rx signal level)-(first tx signal level-first rx signal level). As mentioned above, the second tx signal level is for the third unit tx 108a, the second rx signal level is for the second unit rx 105c, the first tx signal level is for the second unit tx 105a and the first rx signal level is for the third unit rx 108c. As seen in figure 7c, the correlation between all four signal levels are substantially horizontal and at the level of 0dB.

**Figures 8a, 8b** **and** **8c** illustrate a use case when hardware located in the wired communication link 110 is starting to deteriorate. The x-axis of the graphs in figures 8a, 8b and 8c represents the time measured in days and the y-axis represents the signal level measured in dBm and the signal ratio in dB.

In figure 8a, a first tx signal level for the second unit tx 105a is shown as the top line and the first txfb signal level for the second unit txfb 105b is the middle line. The first tx signal level for the second unit tx 105a minus the first rx signal level for the third unit rx 108c is illustrated as the bottom line in figure 8a. The two top lines in figure 8a are seen to be substantially horizontal. However, the bottom line is increasing which indicates that hardware located in the wired communication link 110 is starting to deteriorate.

In figure 8b, a second tx signal level for the third unit tx 108a is shown as the top line and the second txfb signal level for the third unit txfb 108b is the middle line. The second tx signal level for the third unit tx 108a minus the second rx signal level for the second unit rx 105c is illustrated as the bottom line in figure 8b. The two top lines in figure 8b are seen to be substantially horizontal. However, the bottom line is increasing which indicates that hardware located in the wired communication link 110 is starting to deteriorate.

In figure 8c, the line represents a correlation between the bottom lines in figures 8a and 8b. In other words, (second tx signal level-second rx signal level)-(first tx signal level-first rx signal level). As mentioned above, the second tx signal level is for the third unit tx 108a, the second rx signal level is for the second unit rx 105c, the first tx signal level is for the second unit tx 105a and the first rx signal level is for the third unit rx 108c. As seen in figure 8c, the correlation between all four signal levels are substantially horizontal and at the level of 0dB.

**Figures 9a, 9b** **and** **9c** illustrate a use case when hardware located in the second unit 105 is starting to deteriorate, e.g. the second unit tx 105a. The x-axis of the graphs in figures 9a, 9b and 9c represents the time measured in days and the y-axis represents the signal level measured in dBm and the signal ratio in dB.

In figure 9a, a first tx signal level for the second unit tx 105a is shown as the top line and the first txfb signal level for the second unit txfb 105b is the middle line. The first tx signal level for the second unit tx 105a minus the first rx signal level for the third unit rx 108c is illustrated as the bottom line in figure 9a. The top line in figure 9a for the first tx signal level is seen to be substantially horizontal. However, the middle line is first substantially horizontal and then declining. The bottom line is first substantially horizontal and then increasing which indicates that hardware located in the second unit 105, e.g. the second unit tx 105a, is deteriorating.

In figure 9b, a second tx signal level for the third unit tx 108a is shown as the top line and the second txfb signal level for the third unit txfb 108b is the middle line. The second tx signal level for the third unit tx 108a minus the second rx signal level for the second unit rx 105c is illustrated as the bottom line in figure 9b. All three lines in figure 9b are seen to be substantially horizontal which indicates that there is no deteriorating hardware in the third unit tx 108a or the second unit rx 105c.

In figure 9c, the line represents a correlation between the bottom lines in figures 9a and 9b. In other words, (second tx signal level-second rx signal level)-(first tx signal level-first rx signal level). As mentioned above, the second tx signal level is for the third unit tx 108a, the second rx signal level is for the second unit rx 105c, the first tx signal level is for the second unit tx 105a and the first rx signal level is for the third unit rx 108c. As seen in figure 9c, the line representing the correlation between all four signal levels is first substantially horizontal at the level of 0dB and then declining, which indicates that the second unit 105 comprises deteriorating hardware, i.e. that the second unit tx 105a comprises deteriorating hardware.

**Figures 10a, 10b** **and** **10c** illustrate a use case when hardware located in the third unit 108 is starting to deteriorate, e.g. the third unit tx 108a. The x-axis of the graphs in figures 10a, 10b and 10c represents the time measured in days and the y-axis represents the signal level measured in dBm and the signal ratio in dB.

In figure 10a, a first tx signal level for the second unit tx 105a is shown as the top line and the first txfb signal level for the second unit txfb 105b is the middle line. The first tx signal level for the second unit tx 105a minus the first rx signal level for the third unit rx 108c is illustrated as the bottom line in figure 10a. All three lines in figure 8a are substantially horizontal, which indicates that there is no deteriorating hardware in the second unit tx 105a or the third unit rx 108c.

In figure 10b, a second tx signal level for the third unit tx 108a is shown as the top line and the second txfb signal level for the third unit txfb 108b is the middle line. The second tx signal level for the third unit tx 108a minus the second rx signal level for the second unit rx 105c (second tx signal level -second rx signal level) is illustrated as the bottom line in figure 10b. The top line in figure 10b for the third unit tx 108a is seen to be substantially horizontal. However, the middle bottom line is first substantially horizontal and then declining. The bottom line is first substantially horizontal and then increasing which indicates that hardware located in the third unit 108, e.g. the third unit tx 108a, is deteriorating.

In figure 10c, the line represents a correlation between the bottom lines in figures 10a and 10b. In other words, (second tx signal level-second rx signal level)-(first tx signal level-first rx signal level), where - indicates minus/subtraction. As mentioned above, the second tx signal level is for the third unit tx 108a, the second rx signal level is for the second unit rx 105c, the first tx signal level is for the second unit tx 105a and the first rx signal level is for the third unit rx 108c. As seen in figure 10c, the line representing the correlation between all four signal levels is first substantially horizontal at the level of 0dB and then increasing, which indicates that the third unit 108 comprises deteriorating hardware.

**Figures 11a, 11b** **and** **11c** illustrate a use case when hardware located in the second unit 105 is starting to deteriorate, e.g. the second unit rx 105c. The x-axis of the graphs in figures 11a, 11b and 11c represents the time measured in days and the y-axis represents the signal level measured in dBm and the signal ratio in dB.

In figure 11a, a first tx signal level for the second unit tx 105a is shown as the top line and the first txfb signal level for the second unit txfb 105b is the middle line. The first tx signal level for the second unit tx 105a minus the first rx signal level (first tx signal level - first rx signal level) for the third unit rx 108c is illustrated as the bottom line in figure 11a. All three lines in figure 11a are substantially horizontal, which indicates that there is no deteriorating hardware in the second unit tx 105a or the third unit rx 108c.

In figure 11b, a second tx signal level for the third unit tx 108a is shown as the top line and the second txfb signal level for the third unit txfb 108b is the middle line. The second tx signal level for the third unit tx 108a minus the second rx signal level for the second unit rx 105c (second tx signal level - second rx signal level) is illustrated as the bottom line in figure 11b. The two top lines in figure 11b for the third unit tx 108a and the third unit txfb 108b are substantially horizontal. However, the bottom line is first substantially horizontal and then increasing which indicates that hardware located in the second unit 105, i.e. the second unit rx 105c, is deteriorating.

In figure 11c, the line represents a correlation between the bottom lines in figures 11a and 11b. In other words, (second tx signal level-second rx signal level)-(first tx signal level-first rx signal level). As mentioned above, the second tx signal level is for the third unit tx 108a, the second rx signal level is for the second unit rx 105c, the first tx signal level is for the second unit tx 105a and the first rx signal level is for the third unit rx 108c. As seen in figure 11c, the line representing the correlation between all four signal levels is first substantially horizontal at the level of 0dB and then increasing, which indicates that the second unit 105 comprises deteriorating hardware, i.e. the second unit rx 105c.

**Figures 12a, 12b** and **12c** illustrate a use case when hardware located in the third unit 108 is starting to deteriorate, e.g. the third unit rx 108c. The x-axis of the graphs in figures 12a, 12b and 12c represents the time measured in days and the y-axis represents the signal level measured in dBm and the signal ratio in dB.

In figure 12a, a first tx signal level for the second unit tx 105a is shown as the top line and the first txfb signal level for the second unit txfb 105b is the middle line. The first tx signal level for the second unit tx 105a minus the first rx signal level for the third unit rx 108c (first tx signal level - first rx signal level) is illustrated as the bottom line in figure 12a. The two top lines in figure 12a are substantially horizontal. The bottom line in figure 12a is first substantially horizontal at 0dB and then increasing. This indicates that the third unit 108 comprises deteriorating hardware, i.e. the third unit rx 108c.

In figure 12b, a second tx signal level for the third unit tx 108a is shown as the top line and the second txfb signal level for the third unit txfb 108b is the middle line. The second tx signal level for the third unit tx 108a minus the second rx signal level for the second unit rx 105c (second tx signal level - second rx signal level) is illustrated as the bottom line in figure 12b. The lines in figure 12b which are substantially horizontal which indicates that there is no deteriorating hardware located in the third unit tx 108a or the second unit rx 105c.

In figure 12c, the line represents a correlation between the bottom lines in figures 12a and 12b. In other words, (second tx signal level-second rx signal level)-(first tx signal level-first rx signal level). As mentioned above, the second tx signal level is for the third unit tx 108a, the second rx signal level is for the second unit rx 105c, the first tx signal level is for the second unit tx 105a and the first rx signal level is for the third unit rx 108c. As seen in figure 12c, the line representing the correlation between all four signal levels is first substantially horizontal at the level of 0dB and then declining, which indicates that the third unit 108 comprises deteriorating hardware, i.e. the third unit rx 108c.

Summarized, by analyzing the signal levels collected from the different gauges and processing them in the local equipment or sending the data to a database for offline analysis, trends may be picked up that may indicate deteriorating cables, equipment containing faulty components.

The analysis may also provide a prediction of when the signal thresholds between the second unit 105 and the third unit 108 (due to component or cable degradation) is likely to occur and indicate to network operations center an early warning so that the fault may be dealt with before happening.

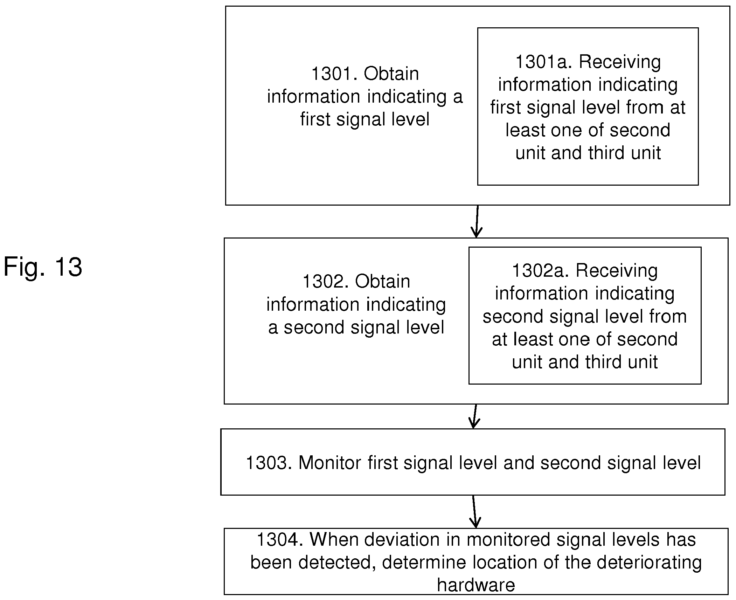

The method described above will now be described seen from the perspective of the first unit 101. **Figure 13** is a flowchart describing the present method in the first unit 101, for determining location of deteriorating hardware in a communications system 100. The method comprises the following steps to be performed by the first unit 101:

### Step 1301

This step corresponds to step 204 in figure 2. The first unit 101 obtains information indicating a first signal level of a first signal 201 transmitted from a second unit 105 to a third unit 108 over a wired communication link 110 and over a period of time.

In some embodiments, the first signal level comprises a first tx signal level for the first signal 201 when transmitted from the second unit 105) and a first rx signal level for the first signal 201 when received by the third unit 108.

In some embodiments, the first signal level further comprises a first txfb signal level for the first signal when transmitted from the second unit 105.

The first tx signal level and first txfb signal level may have been measured by the second unit 105 and the first rx signal level may have been measured by the third unit 108.

### Step 1301a

This step corresponds to step 203 in figure 2 and is a sub step of step 1301. In some embodiments, the first unit 101 receives information indicating the first signal level from at least one of the second unit 105 and the third unit 108.

### Step 1302

This step corresponds to step 208 in figure 2. The first unit 101 obtains information indicating a second signal level of a second signal 205 transmitted from the third unit 108 to the second unit 105 over the wired communication link 110 and over the period of time.

In some embodiments, the second signal level comprises a second tx signal level for the second signal 205 when transmitted from the third unit 108 and a second rx signal level for the second signal 205 when received by the second unit 105.

In some embodiments, the second signal level comprises a second txfb signal level for the second signal when transmitted from the third unit 108.

The second tx signal level and the second txfb signal level may have been measured by the third unit 108 and the second rx signal level may have been measured by the second unit 105.

### Step 1302a

This step corresponds to step 207 in figure 2 and is a sub step of step 1302. In some embodiments, the first unit 101 receives information indicating the second signal level from at least one of the second unit 105 and the third unit 108.

### Step 1303

This step corresponds to step 210 in figure 2. The first unit 101 monitors the first signal level and the second signal level over the period of time. In some embodiments, a correlation between the first signal level and the second signal level is monitored.

### Step 1304

This step corresponds to step 212 in figure 2. When a deviation in the monitored signal levels has been detected, the first unit 101 determines a location of the deteriorating hardware by comparing the deviation in monitored signal levels to known signal deviations for various locations of the deteriorating hardware. The location is in at least one of the wired communication link 110, the second unit 105 and the third unit 108. The deviation may be detected when the correlation is equal to or above a threshold. The known signal deviations may be seen in figures 7-12 and in their corresponding description above.

In some embodiments, the deteriorating hardware located in the second unit 105 is at least one of a second tx unit 105a or a second rx unit 105c comprised in the second unit (105. In some embodiments, the deteriorating hardware in the third unit 108 is at least one of a third tx unit 108a or a third rx unit 108c comprised in the third unit 108.

The wired communication link 110 may comprise a first wired communication link dedicated to signals transmitted from the second unit 105 to the third unit 108 and a second wired communication link dedicated to signals transmitted from the third unit 108 to the second unit 105.

In some embodiments, the second unit 105 is comprised within an IDU and the third unit 108 is comprised within an ODU. In some embodiments, the first unit 101 and the second unit 105 are both comprised within the IDU and the third unit 108 is comprised within the ODU. In other embodiments, the second unit 105 is comprised within the ODU and the third unit 108 is comprised within the IDU. In some embodiments, the first unit 101 and the second unit 105 are both comprised within the ODU and the third unit 108 is comprised within the IDU.

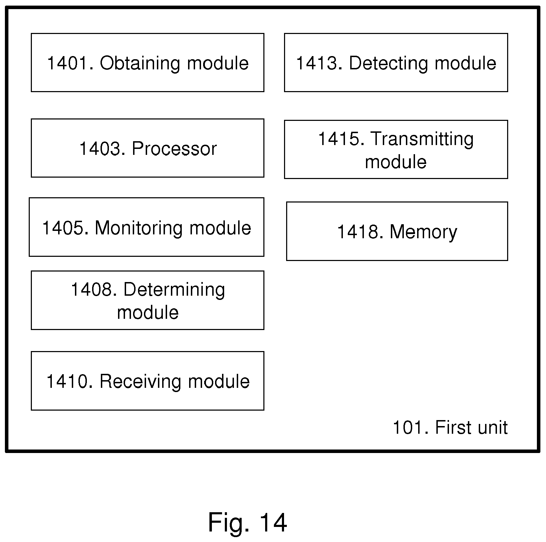

Embodiments of the first unit 101 configured to perform the method actions for determining location of deteriorating hardware in a communications system 100, as described above in relation to Figures 2-13, is depicted in **Figure 14****.**

The first unit 101 is configured to, e.g. by means of an **obtaining module 1401,** obtain information indicating a first signal level of a first signal 201 transmitted from a second unit 105 to a third unit 108 over a wired communication link 110 and over a period of time. The obtaining module 1401 may be a **processor 1403** of the first unit 101. The first signal level may comprise a first tx signal level for the first signal 201 when transmitted from the second unit 105 and a first rx signal level for the first signal 201 when received by the third unit 108. The first signal level may further comprise a first txfb signal level for the first signal when transmitted from the second unit 105. The first tx signal level and first txfb signal level may have been measured by the second unit 105 and the first rx signal level may have been measured by the third unit 108. The obtaining module 1401 may also be referred to as an obtaining unit, an obtaining means, an obtaining circuit, means for obtaining etc.

The first unit 101 is configured to, e.g. by means of the obtaining module 1401, obtain information indicating a second signal level of a second signal 205 transmitted from the third unit 108 to the second unit 105 over the wired communication link 110 and over the period of time. The second signal level may comprise a second tx signal level for the second signal 205 when transmitted from the third unit 108 and a second rx signal level for the second signal 205 when received by the second unit 105. The second signal level may further comprise a second txfb signal level for the second signal when transmitted from the third unit 108. The second tx signal level and the second txfb signal level may have been measured by the third unit 108 and the second rx signal level may have been measured by the second unit 105.

The first unit 101 is configured to, e.g. by means of a **monitoring module 1405,** monitor the first signal level and the second signal level over the period of time. The monitoring module 1404 may be the processor 1403 of the first unit 101. The monitoring module 1405 may also be referred to as a monitoring unit, a monitoring means, a monitoring circuit, means for monitoring etc.

The first unit 101 is configured to, e.g. by means of a **determining module 1408,** when a deviation in the monitored signal levels has been detected, determine a location of the deteriorating hardware. The location is in at least one of the wired communication link 110, the second unit 105 and the third unit 108. The determining module 1408 may be the processor 1403 of the first unit 101. The determining module 1408 may also be referred to as a determining unit, a determining means, a determining circuit, means for determining etc.

In some embodiments, the first unit 101 is configured to, e.g. by means of a **receiving module 1410,** receive information indicating the first signal level from at least one of the second unit 105 and the third unit 108. In some embodiments, the first unit 101 is configured to, e.g. by means of the receiving module 1410, receive information indicating the second signal level from at least one of the second unit 105 and the third unit 108. The receiving module 1410 may also be referred to as a receiving unit, a receiving means, a receiving circuit, means for receiving, an input unit etc. The receiving module 1410 may be a receiver, a transceiver etc. The receiving module 1410 may be a wireless receiver of the first unit 101 of a wireless or fixed communications system.

In some embodiments, the first unit 101 is further configured to, e.g. by means of the monitoring module 1405, monitor a correlation between the first signal level and the second signal level.

In some embodiments, the first unit 101 is further configured to, e.g. by means of a **detecting module 1413,** detect the deviation when the correlation is equal to or above a threshold. The detecting module 1413 may be the processor 1403 of the first unit 101. The detecting module 1413 may also be referred to as a detecting unit, a detecting means, a detecting circuit, means for detecting etc.

The deteriorating hardware located in the second unit 105 may be at least one of a second tx unit 105a or a second rx unit 105c comprised in the second unit 105. The deteriorating hardware in the third unit 108 may be at least one of a third tx unit 108a or a third rx unit 108c comprised in the third unit 108.

The wired communication link 110 may comprises a first wired communication link dedicated to signals transmitted from the second unit 105 to the third unit 108 and a second wired communication link dedicated to signals transmitted from the third unit 108 to the second unit 105.

In some embodiments, the second unit 105 is comprised within an IDU and the third unit 108 is comprised within an ODU. In other embodiments, the first unit 101 and the second unit 105 are both comprised within the IDU and the third unit 108 is comprised within the ODU. In some embodiments, the second unit 105 is comprised within the ODU and the third unit 108 is comprised within the IDU. In other embodiments, the first unit 101 and the second unit 105 are both comprised within the ODU and the third unit 108 is comprised within the IDU.

In some embodiments, the first unit 101 is configured to, e.g. by means of a **transmitting module 1415,** transmit data, signals, information etc. to other units in the communications system 100. The transmitting module 1415 may also be referred to as a transmitting unit, a transmitting means, a transmitting circuit, means for transmitting, an output unit etc. The transmitting module 1415 may be a transmitter, a transceiver etc. The transmitting module 1415 may be a wireless transmitter of the first unit 101 of a wireless or fixed communications system.

In some embodiments, the first unit 101 comprises a **memory 1418** comprising one or more memory units. The memory 1415 is arranged to be used to store data, received data streams, signal levels, the first signal, the second signal, information indicating the deviation, information indicating the correlation, threshold values, time periods, configurations, schedulings, and applications to perform the methods herein when being executed in the first unit 101.

The present mechanism for determining location of deteriorating hardware in a communications system 100 may be implemented through one or more processors, such as a processor 1403 in the first unit arrangement depicted in Figure 14, together with computer program code for performing the functions of the embodiments herein. The processor may be for example a Digital Signal Processor (DSP), Application Specific Integrated Circuit (ASIC) processor, Field-programmable gate array (FPGA) processor or microprocessor. The program code mentioned above may also be provided as a computer program product, for instance in the form of a data carrier carrying computer program code for performing the embodiments herein when being loaded into the first unit 101. One such carrier may be in the form of a CD ROM disc. It is however feasible with other data carriers such as a memory stick. The computer program code can furthermore be provided as pure program code on a server and downloaded to the first unit 101.

Those skilled in the art will also appreciate that the obtaining module 1401, the monitoring module 1405, the determining module 1408, the receiving module 1410, the detecting module 1413 and the transmitting module 1415 described above may refer to a combination of analog and digital circuits, and/or one or more processors configured with software and/or firmware, e.g. stored in a memory, that when executed by the one or more processors such as the processor 1403 perform as described above. One or more of these processors, as well as the other digital hardware, may be included in a single ASIC, or several processors and various digital hardware may be distributed among several separate components, whether individually packaged or assembled into a system-on-a-chip (SoC).

A computer program may comprise instructions which, when executed on at least one processor, e.g. the processor 1403 depicted in figure 14, cause the at least one processor to carry out the method as described in any one of figures 2-13. A carrier may comprise the computer program. The carrier may be one of an electronic signal, optical signal, radio signal or computer readable storage medium, e.g. the memory 1418 depicted in figure 14.

The embodiments herein are not limited to the above described embodiments. Various alternatives, modifications and equivalents may be used. Therefore, the above embodiments should not be taken as limiting the scope of the embodiments, which is defined by the appending claims.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

The term "configured to" used herein may also be referred to as "arranged to", "adapted to", "capable of" or "operative to".

It should also be emphasized that the steps of the methods defined in the appended claims may, without departing from the embodiments herein, be performed in another order than the order in which they appear in the claims.

## Claims

1. A method in a first unit (101) for determining a location of deteriorating hardware in a communications system (100),
the communications system (100) comprising a first and a second unit (101, 105) and a third unit (108), the second and the third unit communicating with one another over a wired communication link (110);
the second unit (105) comprising
a second unit transmitter, tx, (105a);
a second unit transmit feedback entity, txfb, (105b), providing a transmit feedback signal associated with a signal level of a transmit signal of the second unit transmitter, tx, (105a) at a position close to the second unit transmitter, tx, (105a); and
a second unit receiver, rx, (105c)
the third unit (108) comprising
a third unit transmitter, tx, (108a);
a third unit transmit feedback entity, txfb, (108b), providing a transmit feedback signal associated with a signal level of a transmit signal of the third unit transmitter, tx, (108a) at position close to the third unit transmitter, tx, (108a); and a third unit receiver, rx, (108c);
the method comprising:
- monitoring (1303) and obtaining (1301, 1302) signal level information over a period of time concerning
- a signal A constituting a transmit feedback signal of the second unit transmit feedback entity (105b);
- a signal B constituting a difference signal based on a transmitted signal pertaining to the second unit transmitter (105a) and on a received signal pertaining to the third unit receiver (108c);
- a signal C constituting a transmit feedback signal of the third unit transmit feedback entity (108b);
- a signal D constituting a difference signal based on a transmitted signal pertaining to the third unit transmitter (108a) and on a received signal pertaining to the second unit receiver (105c);
- a further difference signal E based on said difference signal B and said difference signal D; wherein when a deviation in the monitored signal levels has been detected (1304),
- determining a location of the deteriorating hardware by comparing the deviation in monitored signal levels to known signal deviations for various locations of the deteriorating hardware, wherein the location is in at least one of the wired communication link (110), the second unit (105) and the third unit (108).

2. The first unit according to claim 1, wherein a fault on the wired communication link (110) is detected if signals B and D change over time while signals A, C and E are substantially constant.

3. The first unit according to claim 1, wherein a fault on the second transmit unit (105a) is detected if signals A, B and E change over time while signals C and D are substantially constant.

4. The first unit according to claim 1, wherein a fault on the third transmit unit (108a) is detected if signals C, D and E change over time while signals A and B are substantially constant.

5. The first unit according to claim 1, wherein a fault on the second receive unit (105c) is detected if signals D and E change over time while signals A, B and C are substantially constant.

6. The first unit according to claim 1, wherein a fault on the third receive unit (108c) is detected if signals B and E change over time while signals A, C and D are substantially constant.

7. The first unit according to claim 1, wherein no fault is detected if signals A, B, C, D, and E are substantially constant over time.

8. A first unit (101) for determining a location of deteriorating hardware in a communications system (100),
the communications system (100) comprising a first and a second unit (101, 105) and a third unit (108), the second and the third unit communicating with one another over a wired communication link (110);
the second unit (105) comprising
a second unit transmitter, tx, (105a);
a second unit transmit feedback entity, txfb, (105b), configured to provide a transmit feedback signal associated with a signal level of a transmit signal of the second unit transmitter, tx, (105a), at a position close to the second unit transmitter, tx, (105a); and
a second unit receiver, rx, (105c);
the third unit (108) comprising
a third unit transmitter, tx (108a);
a third unit transmit feedback entity, txfb, (108b), configured to provide a transmit feedback signal associated with a signal level of a transmit signal of the third unit transmitter, tx, (108a), at a position close to the third unit transmitter, tx, (108a); and
a third unit receiver, rx, (108c);
the first unit (101) being configured to monitor (1303) and obtain (1301, 1302) signal level information over a period of time concerning
- a signal A constituting a transmit feedback signal of the second unit transmit feedback entity (105b);- a signal B constituting a difference signal based on a transmitted signal pertaining to the second unit transmitter (105a) and on a received signal pertaining to the third unit receiver (108c);
- a signal C constituting a transmit feedback signal of the third unit transmit feedback entity (108b);
- a signal D constituting a difference signal based on a transmitted signal pertaining to the third unit transmitter (108a) and on a received signal pertaining to the second unit receiver (105c);
- a further difference signal E based on said difference signal B and said difference signal D; the first unit (101) being further configured to:
when a deviation in the monitored signal levels has been detected (1304),
- determine a location of the deteriorating hardware by comparing the deviation in monitored signal levels to known signal deviations for various locations of the deteriorating hardware, wherein the location is in at least one of the wired communication link (110), the second unit (105) and the third unit (108).

9. The first unit according to claim 8, further configured to detect a fault on the wired communication link (110) if signals B and D change over time while signals A, C and E are substantially constant.

10. The first unit according to claim 8, further configured to detect a fault on the second transmit unit (105a) if signals A, B and E change over time while signals C and D are substantially constant.

11. The first unit according to claim 8, further configured to detect a fault on the third transmit unit (108a) if signals C, D and E change over time while signals A and B are substantially constant.

12. The first unit according to claim 8, further configured to detect a fault on the second receive unit (105c) if signals D and E change over time while signals A, B and C are substantially constant.

13. The first unit according to claim 8, further configured to detect a fault on the third receive unit (108c) if signals B and E change over time while signals A, C and D are substantially constant.

14. The first unit according to claim 8, further configured to detect no fault if signals A, B, C, D, and E are substantially constant over time.

15. The first unit according to any one of claims 8-14, wherein the second unit (105) is comprised within an InDoor Unit, IDU, and the third unit (108) is comprised within an OutDoor Unit, ODU, or
wherein the first unit (101) and the second unit (105) are both comprised within the IDU and the third unit (108) is comprised within the ODU, or
wherein the second unit (105) is comprised within the ODU and the third unit (108) is comprised within the IDU, or
wherein the first unit (101) and the second unit (105) are both comprised within the ODU and the third unit (108) is comprised within the IDU.

## Patentansprüche

1. Verfahren in einer ersten Einheit (101) zum Bestimmen einer Stelle einer verfallenden Hardware in einem Kommunikationssystem (100),
wobei das Kommunikationssystem (100) eine erste und eine zweite Einheit (101, 105) und eine dritte Einheit (108) umfasst, wobei die zweite und die dritte Einheit miteinander über eine verdrahtete Kommunikationsverbindung (110) kommunizieren;
die zweite Einheit (105) umfassend
einen Zweite Einheit-Sender, tx, (105a);
eine Zweite Einheit-Senderückmeldungsinstanz, txfb, (105b), die ein Senderückmeldungssignal bereitstellt, das mit einem Signalpegel eines Sendesignals des Zweite Einheit-Senders, tx, (105a) an einer Position nahe dem Zweite Einheit-Sender, tx, (105a) gekoppelt ist; und
einen Zweite Einheit-Empfänger, rx, (105c),
die dritte Einheit (108) umfassend
einen Dritte Einheit-Sender, tx, (108a);
eine Dritte Einheit-Senderückmeldungsinstanz, txfb, (108b), die ein Senderückmeldungssignal bereitstellt, das mit einem Signalpegel eines Sendesignals des Dritte Einheit-Senders, tx, (108a) an einer Position nahe dem Dritte Einheit-Sender, tx, (108a) gekoppelt ist; und
einen Dritte Einheit-Empfänger, rx, (108c),
das Verfahren umfassend
- Überwachen (1303) und Erhalten (1301, 1302) von Signalpegelinformationen über einen Zeitraum in Bezug auf
- ein Signal A, das ein Senderückmeldungssignal der Zweite Einheit-Senderückmeldungsinstanz (105b) darstellt;
- ein Signal B, das ein Differenzsignal basierend auf einem gesendeten Signal, das zum Zweite Einheit-Sender (105a) gehört, und einem empfangenen Signal, das zum Dritte Einheit-Empfänger (108c) gehört, darstellt;
- ein Signal C, das ein Senderückmeldungssignal der Dritte Einheit-Senderückmeldungsinstanz (108b) darstellt;
- ein Signal D, das ein Differenzsignal basierend auf einem gesendeten Signal, das zum Dritte Einheit-Sender (108a) gehört, und einem empfangenen Signal, das zum Zweite Einheit-Empfänger (105c) gehört, darstellt;
- ein weiteres Differenzsignal E, das auf dem Differenzsignal B und dem Differenzsignal D basiert; wobei
wenn eine Abweichung in den überwachten Signalpegeln erfasst wurde (1304),
- Bestimmen einer Stelle der verfallenden Hardware durch Vergleichen der Abweichung in überwachten Signalpegeln mit bekannten Signalabweichungen für verschiedene Stellen der verfallenden Hardware, wobei die Stelle in mindestens einer der verdrahteten Kommunikationsverbindung (110), der zweiten Einheit (105) und der dritten Einheit (108) ist.

2. Erste Einheit nach Anspruch 1, wobei ein Fehler auf der verdrahteten Kommunikationsverbindung (110) erfasst wird, falls sich Signale B und D im Laufe der Zeit ändern, während Signale A, C und E im Wesentlichen konstant sind.

3. Erste Einheit nach Anspruch 1, wobei ein Fehler auf der zweiten Sendeeinheit (105a) erfasst wird, falls sich Signale A, B und E im Laufe der Zeit ändern, während Signale C und D im Wesentlichen konstant sind.

4. Erste Einheit nach Anspruch 1, wobei ein Fehler auf der dritten Sendeeinheit (108a) erfasst wird, falls sich Signale C, D und E im Laufe der Zeit ändern, während Signale A und B im Wesentlichen konstant sind.

5. Erste Einheit nach Anspruch 1, wobei ein Fehler auf der zweiten Empfangseinheit (105c) erfasst wird, falls sich Signale D und E im Laufe der Zeit ändern, während Signale A, B und C im Wesentlichen konstant sind.

6. Erste Einheit nach Anspruch 1, wobei ein Fehler auf der dritten Empfangseinheit (108c) erfasst wird, falls sich Signale B und E im Laufe der Zeit ändern, während Signale A, C und D im Wesentlichen konstant sind.

7. Erste Einheit nach Anspruch 1, wobei kein Fehler erfasst wird, falls Signale A, B, C, D und E im Wesentlichen im Laufe der Zeit konstant sind.

8. Erste Einheit (101) zum Bestimmen einer Stelle einer verfallenden Hardware in einem Kommunikationssystem (100),
wobei das Kommunikationssystem (100) eine erste und eine zweite Einheit (101, 105) und eine dritte Einheit (108) umfasst, wobei die zweite und die dritte Einheit miteinander über eine verdrahtete Kommunikationsverbindung (110) kommunizieren;
die zweite Einheit (105) umfassend
einen Zweite Einheit-Sender, tx, (105a);
eine Zweite Einheit-Senderückmeldungsinstanz, txfb, (105b), die konfiguriert ist, ein Senderückmeldungssignal bereitzustellen, das mit einem Signalpegel eines Sendesignals des Zweite Einheit-Senders, tx, (105a) an einer Position nahe dem Zweite Einheit-Sender, tx, (105a) verknüpft ist; und
einen Zweite Einheit-Empfänger, rx, (105c),
die dritte Einheit (108) umfassend
einen Dritte Einheit-Sender, tx, (108a);
eine Dritte Einheit-Senderückmeldungsinstanz, txfb, (108b), die konfiguriert ist, ein Senderückmeldungssignal bereitzustellen, das mit einem Signalpegel eines Sendesignals des Dritte Einheit-Senders, tx, (108a) an einer Position nahe dem Dritte Einheit-Sender, tx, (108a) verknüpft ist; und
einen Dritte Einheit-Empfänger, rx, (108c),
wobei die erste Einheit (101) konfiguriert ist zum Überwachen (1303) und Erhalten (1301, 1302) von Signalpegelinformationen über einen Zeitraum in Bezug auf
- ein Signal A, das ein Senderückmeldungssignal der Zweite Einheit-Senderückmeldungsinstanz (105b) darstellt;
- ein Signal B, das ein Differenzsignal basierend auf einem gesendeten Signal, das zum Zweite Einheit-Sender (105a) gehört, und einem empfangenen Signal, das zum Dritte Einheit-Empfänger (108c) gehört, darstellt;
- ein Signal C, das ein Senderückmeldungssignal der Dritte Einheit-Senderückmeldungsinstanz (108b) darstellt;
- ein Signal D, das ein Differenzsignal basierend auf einem gesendeten Signal, das zum Dritte Einheit-Sender (108a) gehört, und einem empfangenen Signal, das zum Zweite Einheit-Empfänger (105c) gehört, darstellt;
- ein weiteres Differenzsignal E, das auf dem Differenzsignal B und dem Differenzsignal D basiert; wobei die erste Einheit (101) ferner konfiguriert ist zum:
wenn eine Abweichung in den überwachten Signalpegeln erfasst wurde (1304),
- Bestimmen einer Stelle der verfallenden Hardware durch Vergleichen der Abweichung in überwachten Signalpegeln mit bekannten Signalabweichungen für verschiedene Stellen der verfallenden Hardware, wobei die Stelle in mindestens einer der verdrahteten Kommunikationsverbindung (110), der zweiten Einheit (105) und der dritten Einheit (108) ist.

9. Erste Einheit nach Anspruch 8, die ferner konfiguriert ist, einen Fehler auf der verdrahteten Kommunikationsverbindung (110) zu erfassen, falls sich Signale B und D im Laufe der Zeit ändern, während Signale A, C und E im Wesentlichen konstant sind.

10. Erste Einheit nach Anspruch 8, die ferner konfiguriert ist, einen Fehler auf der zweiten Sendeeinheit (105a) zu erfassen, falls sich Signale A, B und E im Laufe der Zeit ändern, während Signale C und D im Wesentlichen konstant sind.

11. Erste Einheit nach Anspruch 8, die ferner konfiguriert ist, einen Fehler auf der dritten Sendeeinheit (108a) zu erfassen, falls sich Signale C, D und E im Laufe der Zeit ändern, während Signale A und B im Wesentlichen konstant sind.

12. Erste Einheit nach Anspruch 8, die ferner konfiguriert ist, einen Fehler auf der zweiten Empfangseinheit (105c) zu erfassen, falls sich Signale D und E im Laufe der Zeit ändern, während Signale A, B und C im Wesentlichen konstant sind.

13. Erste Einheit nach Anspruch 8, die ferner konfiguriert ist, einen Fehler auf der dritten Empfangseinheit (108c) zu erfassen, falls sich Signale B und E im Laufe der Zeit ändern, während Signale A, C und D im Wesentlichen konstant sind.

14. Erste Einheit nach Anspruch 8, die ferner konfiguriert ist, keinen Fehler zu erfassen, falls Signale A, B, C, D und E im Wesentlichen im Laufe der Zeit konstant sind.

15. Erste Einheit nach einem der Ansprüche 8 bis 14, wobei die zweite Einheit (105) in einer InDoor-Einheit, IDU, enthalten ist und die dritte Einheit (108) in einer OutDoor-Einheit, ODU, enthalten ist oder
wobei die erste Einheit (101) und die zweite Einheit (105) beide in der IDU enthalten sind und die dritte Einheit (108) in der ODU enthalten ist oder
wobei die zweite Einheit (105) in der ODU enthalten ist und die dritte Einheit (108) in der IDU enthalten ist oder
wobei die erste Einheit (101) und die zweite Einheit (105) beide in der ODU enthalten sind und die dritte Einheit (108) in der IDU enthalten ist.

## Revendications

1. Procédé dans une première unité (101) permettant de déterminer un emplacement d'un matériel se détériorant dans un système de communication (100),
le système de communication (100) comprenant des première et deuxième unités (101, 105) et une troisième unité (108), les deuxième et troisième unités communiquant l'une avec l'autre sur une liaison de communication filaire (110) ;
la deuxième unité (105) comprenant :
un émetteur de deuxième unité, tx, (105a) ;
une entité de rétroaction de transmission de deuxième unité, txfb, (105b), fournissant un signal de rétroaction de transmission associé à un niveau de signal d'un signal de transmission de l'émetteur de deuxième unité, tx, (105a) à une position proche de l'émetteur de deuxième unité, tx, (105a) ; et
un récepteur de deuxième unité, rx, (105c) ;
la troisième unité (108) comprenant :
un émetteur de troisième unité, tx, (108a) ;
une entité de rétroaction de transmission de troisième unité, txfb, (108b), fournissant un signal de rétroaction de transmission associé à un niveau de signal d'un signal de transmission de l'émetteur de troisième unité, tx, (108a) à une position proche de l'émetteur de troisième unité, tx, (108a) ; et
un récepteur de troisième unité, rx, (108c) ;
le procédé comprenant :
- la surveillance (1303) et l'obtention (1301, 1302) d'informations de niveau de signal au cours d'une période de temps concernant
- un signal A constituant un signal de rétroaction de transmission de l'entité de rétroaction de transmission de deuxième unité (105b) ;
- un signal B constituant un signal de différence sur la base d'un signal transmis en ce qui concerne l'émetteur de deuxième unité (105a) et d'un signal reçu en ce qui concerne le récepteur de troisième unité (108c) ;
- un signal C constituant un signal de rétroaction de transmission de l'entité de rétroaction de transmission de troisième unité (108b) ;
- un signal D constituant un signal de différence sur la base d'un signal transmis en ce qui concerne l'émetteur de troisième unité (108a) et d'un signal reçu en ce qui concerne le récepteur de deuxième unité (105c) ;
- un autre signal de différence E sur la base dudit signal de différence B et dudit signal de différence D ; dans lequel
lorsqu'un écart des niveaux de signal surveillés est détecté (1304),
- la détermination d'un emplacement du matériel se détériorant par la comparaison de l'écart de niveaux de signal surveillés à des écarts de signal connus pour divers emplacements du matériel se détériorant, dans lequel l'emplacement est au moins l'une de la liaison de communication filaire (110), la deuxième unité (105) et la troisième unité (108).

2. Première unité selon la revendication 1, dans laquelle un défaut sur la liaison de communication filaire (110) est détecté si des signaux B et D changent dans le temps alors que des signaux A, C et E sont sensiblement constants.

3. Première unité selon la revendication 1, dans laquelle un défaut sur la deuxième unité de transmission (105a) est détecté si des signaux A, B et E changent dans le temps alors que des signaux C et D sont sensiblement constants.

4. Première unité selon la revendication 1, dans laquelle un défaut sur la troisième unité de transmission (108a) est détecté si des signaux C, D et E changent dans le temps alors que des signaux A et B sont sensiblement constants.

5. Première unité selon la revendication 1, dans laquelle un défaut sur la deuxième unité de réception (105c) est détecté si des signaux D et E changent dans le temps alors que des signaux A, B et C sont sensiblement constants.

6. Première unité selon la revendication 1, dans laquelle un défaut sur la troisième unité de réception (108c) est détecté si des signaux B et E changent dans le temps alors que des signaux A, C et D sont sensiblement constants.

7. Première unité selon la revendication 1, dans laquelle aucun défaut n'est détecté si des signaux A, B, C, D et E sont sensiblement constants dans le temps.

8. Première unité (101) permettant de déterminer un emplacement d'un matériel se détériorant dans un système de communication (100),
le système de communication (100) comprenant des première et deuxième unités (101, 105) et une troisième unité (108), les deuxième et troisième unités communiquant l'une avec l'autre sur une liaison de communication filaire (110) ;
la deuxième unité (105) comprenant :
un émetteur de deuxième unité, tx, (105a) ;
une entité de rétroaction de transmission de deuxième unité, txfb, (105b), configurée pour fournir un signal de rétroaction de transmission associé à un niveau de signal d'un signal de transmission de l'émetteur de deuxième unité, tx, (105a) à une position proche de l'émetteur de deuxième unité, tx, (105a) ; et
un récepteur de deuxième unité, rx, (105c) ;
la troisième unité (108) comprenant :
un émetteur de troisième unité, tx, (108a) ;
une entité de rétroaction de transmission de troisième unité, txfb, (108b), configurée pour fournir un signal de rétroaction de transmission associé à un niveau de signal d'un signal de transmission de l'émetteur de troisième unité, tx, (108a) à une position proche de l'émetteur de troisième unité, tx, (108a) ; et
un récepteur de troisième unité, rx, (108c) ;
la première unité (101) étant configurée pour la surveillance (1303) et l'obtention (1301, 1302) d'informations de niveau de signal au cours d'une période de temps concernant
- un signal A constituant un signal de rétroaction de transmission de l'entité de rétroaction de transmission de deuxième unité (105b) ;
- un signal B constituant un signal de différence sur la base d'un signal transmis en ce qui concerne l'émetteur de deuxième unité (105a) et d'un signal reçu en ce qui concerne le récepteur de troisième unité (108c) ;
- un signal C constituant un signal de rétroaction de transmission de l'entité de rétroaction de transmission de troisième unité (108b) ;
- un signal D constituant un signal de différence sur la base d'un signal transmis en ce qui concerne l'émetteur de troisième unité (108a) et d'un signal reçu en ce qui concerne le récepteur de deuxième unité (105c) ;
- un autre signal de différence E sur la base dudit signal de différence B et dudit signal de différence D ; la première unité (101) étant en outre configurée pour :
lorsqu'un écart des niveaux de signal surveillés est détecté (1304),
- la détermination d'un emplacement du matériel se détériorant par la comparaison de l'écart de niveaux de signal surveillés à des écarts de signal connus pour divers emplacements du matériel se détériorant, dans lequel l'emplacement est au moins l'une de la liaison de communication filaire (110), la deuxième unité (105) et la troisième unité (108).

9. Première unité selon la revendication 8, en outre configurée pour la détection d'un défaut sur la liaison de communication filaire (110) si des signaux B et D changent dans le temps alors que des signaux A, C et E sont sensiblement constants.

10. Première unité selon la revendication 8, en outre configurée pour la détection d'un défaut sur la deuxième unité de transmission (105a) si des signaux A, B et E changent dans le temps alors que des signaux C et D sont sensiblement constants.

11. Première unité selon la revendication 8, en outre configurée pour la détection d'un défaut sur la troisième unité de transmission (108a) si des signaux C, D et E changent dans le temps alors que des signaux A et B sont sensiblement constants.

12. Première unité selon la revendication 8, en outre configurée pour la détection d'un défaut sur la deuxième unité de réception (105c) si des signaux D et E changent dans le temps alors que des signaux A, B et C sont sensiblement constants.

13. Première unité selon la revendication 8, en outre configurée pour la détection d'un défaut sur la troisième unité de réception (108c) si des signaux B et E changent dans le temps alors que des signaux A, C et D sont sensiblement constants.

14. Première unité selon la revendication 8, en outre configurée pour la détection d'aucun défaut si des signaux A, B, C, D et E sont sensiblement constants dans le temps.

15. Première unité selon l'une quelconque des revendications 8 à 14, dans laquelle la deuxième unité (105) est comprise dans une unité intérieure, IDU, et la troisième unité (108) est comprise dans une unité extérieure, ODU, ou
dans laquelle la première unité (101) et la deuxième unité (105) sont comprises dans l'IDU et la troisième unité (108) est comprise dans l'ODU, ou
dans laquelle la deuxième unité (105) est comprise dans l'ODU et la troisième unité (108) est comprise dans l'IDU, ou
dans laquelle la première unité (101) et la deuxième unité (105) sont comprises dans l'ODU et la troisième unité (108) est comprise dans l'IDU.
